# EUROPEAN PATENT APPLICATION

(11) **EP 0 976 693 A1**
(43) Date of publication of application: **02.02.2000**
(21) Application number: 99108621.6
(22) Date of filing: 11.05.1999
(51) Int. Cl.: C03C 25/10

(54) **Method for coating an optical fiber**

(30) Priority: 12.05.1998 US 75830
(71) Applicant: Tyco Submarine Systems Ltd., Eatontown, NJ 07724 (US)
(72) Inventor: Shankoff, Theodore A., Rahway, New Jersey 07065 (US)
(74) Representative: VOSSIUS & PARTNER

(57) **Abstract**

An improved method for coating optical fibers. By practicing the disclosed method, one can loosely couple a polymeric coating to an optical fiber segment. The method includes interposing a nonpolar material between a polymeric coating and an optical fiber segment, both of which usually present mostly polar groups. Such a nonpolar material may be interposed between the coating and the fiber segment either by adding a mold release agent to the polymeric system before it is applied to the optical fiber or by coating the outer surface of the optical fiber with a mold release agent. Alternatively, one may chemically treat the outer surface of the optical fiber so that instead of presenting polar groups to any subsequently-applied polymeric coating, the optical fiber segment presents nonpolar groups, which are not attracted to the polar groups of the polymeric coating. A coated optical fiber segment is also provided that contains a nonpolar material interposed between the polymeric coating and the optical fiber segment. Alternatively, a coated optical fiber is provided that includes a treating material having both polar and nonpolar groups, and which is interposed between the optical fiber and the polymeric coating and wherein its polar groups are attracted to the polar groups of the optical fiber segment and its nonpolar groups are not attracted to the polar groups of the polymeric coating. A coated optical fiber is also provided wherein the optical fiber has been chemically reacted to present a plurality of nonpolar groups to a subsequently-applied polymeric coating.

## Description

The present invention relates generally to the field of fiber-optic communications and, more specifically, to an improved method for coating an optical fiber.

Optical fibers play a vital role in the telecommunications industry. Although fiber-optic cables are but one type of telecommunication system, they have the capacity to carry a greater number of data and voice transmissions than traditional cables or modern satellite communication systems. Because of this large capacity, fiber-optic cables are commonly used in submarine cable systems, which are deployed thousands of feet below sea level and which stretch thousands of miles across the ocean's floor.

If one were to cut open a standard "nonarmored" fiber-optic cable used in submarine cable systems (and elsewhere), he would see that each cable is comprised of a series of optical fibers clustered around a steel "king" wire. Typically, each fiber-optic cable contains between 4 and 48 individual optical fibers, although a cable could contain almost any number of optical fibers. Together, these optical fibers form the fiber-optic "core" of the wire. In submarine cable systems, this fiber-optic core is then surrounded by steel strength members and two watertight, insulating jackets (an inner copper jacket and an outer polyethylene jacket), which encase the entire assembly. The function of the optical fibers of a fiber-optic cable is to carry the data and voice transmissions sent over the cable, while the purpose of the steel wires is to carry any loads placed upon the cable and, in conjunction with the insulating jackets, give the cable its rigidity. In today's fiber-optic submarine cable systems, fiber-optic cables connect system amplifiers and repeaters together to form the underseas cable system.

Because of the difficulties inherent in attempting to service or repair a cable system that has been deployed across vast stretches of ocean, reliability is a paramount concern when installing a submarine fiber-optic cable system. The individual optical fibers of a fiber-optic cable, however, can be easily damaged if they are not handled properly. In particular, dust, scratches, or fingerprints on the outer surface of a glass optical fiber may adversely affect the reliability of the fiber and lead to errors in data transmission. Optical fibers, though, are frequently handled when a submarine fiber-optic cable system is being laid across the ocean because installing a submarine cable system that is several thousands of miles in length naturally requires that a very large number of cable sections be combined to form the complete cable system. Thus, whenever two or more sections of cable are combined―either directly or through a component such as an amplifier or a repeater―the optical fibers of each cable must be individually spliced with one or more optical fibers of one or more corresponding cable sections.

To minimize the potential damage that could result to optical fibers when they are handled, especially during the splicing process, individual optical fibers are normally coated along their entire lengths with a protective coating that is applied during the manufacturing process. One type of coating that is commonly used is a polymeric coating. Polymeric coatings are applied to optical fibers through one of several polymerization processes, all of which are well known in the art. In particular, a liquid polymer solution, which is highly viscous, can be brushed or "doctor-bladed" onto the length of exposed optical fiber, or the optical fiber can be pulled through the solution itself. Alternatively, one could coat an optical fiber with a two-component epoxy system, such as an epoxy and epoxy-acrylate. After the optical fiber has been properly coated with a polymeric coating, the coating is then cured, either thermally or with ultraviolet light.

While the advantages of coating optical fibers to protect them during handling are readily appreciated, current coating techniques have drawbacks that make them unsuitable for use in certain optical fiber applications. Polymeric coatings are traditionally tightly coupled to the outer surface of the individual optical fibers. This tight coupling occurs because both the surface of the polymeric coating and the outer surface of the optical fiber to which the polymeric coating is applied each have mostly polar groups, thereby facilitating a polar-polar attraction between the coating and the optical fiber. While a "tight-buffered" (*i.e*., tightly coupled) coating maximizes the protection afforded to each optical fiber, it can lead to stresses being placed on the optical fiber silica, which are usually made of SiO₂, whenever the fiber-optic cable experiences a change in temperature.

It is well known that most substances expand when they are heated and contract when they are cooled. Optical fiber coatings, however, do not necessarily expand and contract at the same rate as the optical fiber to which they are tightly coupled. Accordingly, if a coating that has been tightly coupled to an optical fiber is subjected to even a slight change in temperature, it will create a corresponding shear stress on the optical fiber because the coating and the fiber will be moving at different rates. This shear stress can damage the optical fiber, especially when the thermal expansion/contraction process is repeated over time.

Further, certain segments of optical fibers cannot be exposed to even the slightest stress lest their performance be seriously impaired. Fiber gratings, which play a critical role in fiber-optic cable systems, are one such type of optical fiber segment.

Cable systems frequently have segments of optical fibers that have been modified to form fiber gratings. A common type of fiber grating is a fiber Bragg grating, which is a periodic modulation of the index of refraction of the light-transmitting core of an individual optical fiber. When light traveling through an optical fiber comes in contact with the fiber Bragg grating, a narrow band of wavelengths is reflected back toward the source of the light transmission.

Both the reflectiveness of a fiber Bragg grating and the range of wavelengths that the grating will reflect are functions of the length of the grating and the amplitude of the modulation of the index of refraction. Accordingly, one can tailor a specific fiber Bragg grating to act as one of many basic optical components, such as a mirror, a wavelength filter, or a partial reflector, merely by modifying the length and amplitude of the grating.

The primary uses for a fiber Bragg grating include controlling the wavelength of the light that is traveling down an optical fiber, combining multiple wavelengths of light onto a single optical fiber, and/or routing specific wavelengths of light from one optical fiber to another optical fiber or component. Because fiber Bragg gratings are capable of acting on the light that passes through an optical fiber, the gratings are, in effect, optical components that have been integrated directly into the optical fiber. Thus, by using fiber Bragg gratings in optical systems, one can reduce or eliminate the need for many bulky optical components, thereby making fiber Bragg gratings ideally situated for use in telecommunication, laser, and sensor optical fiber systems.

Each fiber Bragg grating is a segment of optical fiber that is typically between 2 and 12 inches in length. There are several ways by which an optical fiber segment can be modified so as to become a fiber Bragg grating. These methods are well known and include the holographic method, the phase mask method, the amplitude mask method, and the single slit method. Each method involves, in part, stripping the protective polymeric coating off of that particular segment of optical fiber, exposing the bare optical fiber segment to gaseous hydrogen for a period of time, and, after the fiber segment has absorbed a sufficient amount of hydrogen, irradiating the hydrogen-loaded optical fiber with ultraviolet light until the desired grating has been created within the fiber segment. After the UV exposure is complete, the bare optical fiber segment is annealed in an oven to deactivate the remaining hydrogen and stabilize the grating, and then it is processed further by fixturing and final packaging.

Proper packaging of a fiber Bragg grating is essential to maintaining the desired characteristics of the grating. As has already been discussed, the range of wavelengths that a given grating can reflect will vary in part as a function of the grating's length. Thus, even slight changes in the length of a grating, or even slight damage to the grating's outer surface, can cause the fiber grating to reflect the wavelength of choice inefficiently, or even to reflect the wrong wavelength of light all together. Optical fiber gratings, however, contract on cooling and expand on heating, just like regular optical fibers. Accordingly, if a fiber Bragg grating is exposed to changes in temperature, the length of the grating may change and cause the grating to reflect the wrong wavelengths of light (or at least reflect the wavelength of choice inefficiently) and the entire optical system could fail.

As a result, after fiber Bragg gratings have been annealed they are usually deployed in very intricate "packaging," including "oven" packages, which maintain the temperature of the encased grating at a constant, pre-determined, level (*e.g*., 40°C). Alternatively, the gratings may be deployed in "temperature compensated" bi-metallic packages, wherein each end of a housing is made of a different metal with a different coefficient of thermal expansion, such that the housing nullifies the effects of temperature changes on the grating by expanding and contracting exactly counter to the temperature-induced movements of the fiber grating. When a fiber Bragg grating is being packaged, however, the likelihood increases that the exposed fiber grating will become damaged as it is repeatedly handled during the packaging process.

As discussed earlier, the protective coating of an optical fiber is typically removed during the process in which the fiber is made into a fiber Bragg grating. Although it would be desirable to recoat the optical fiber segment after it has been transformed into a fiber Bragg grating so as to protect the fiber grating from any damage that may occur during handling, one must always remember that fiber gratings cannot be subjected to even the slightest shear stresses. Accordingly, it would not be advisable to coat an optical fiber grating with a coating that is tightly coupled to the surface of the grating because, as discussed above, optical fiber gratings and their coatings do not necessarily expand and contract as a function of temperature at the same rate. Accordingly, if a coating that has been tightly coupled to an optical fiber grating is subjected to even a slight change in temperature, it will create a corresponding shear stress on the outer surface of the optical fiber. Moreover, even without temperature changes during field deployment, coatings that undergo stress during curing and retain stress in field life can adversely affect grating performance.

Because a fiber Bragg grating is easily damaged by stresses acting on its outer surface, even a temporary and very slight change in the dimensions of the fiber grating near its outer surface (*e.g*., plus or minus several angstroms) could adversely affect the reliability of the grating and cause unacceptable wavelength shifts in the grating. Thus, despite the fact that a grating's packaging is designed to maintain a constant temperature, it still would not be advisable to couple a coating tightly to an oven-packaged fiber Bragg grating because even a slight change in temperature could cause the coating to move at a different rate than the optical fiber and create a resulting stress on the easily-damaged fiber. Similarly, fiber Bragg gratings that are deployed in temperature compensated types of packages are still not immune to slight changes in temperature that could lead to unacceptable stresses being placed on the outer surface of the grating. Also, as discussed earlier, curing stress and retained stress should also be avoided.

As a result, fiber Bragg gratings are typically deployed without any sort of coating to protect them from handling during the packaging and installation processes. Accordingly, these unprotected optical fiber segments can be easily damaged by dust, scratches, or even fingerprints if they are mishandled in any way. Any such damage to a fiber Bragg gratings is also likely to be very costly; the complex manufacturing process needed to make a single fiber Bragg grating can easily cost more than fifty thousand dollars from start to finish. Furthermore, it is also highly probable that any stress-induced damage to, or change in performance of, a fiber Bragg grating may not be detected until after the grating has been deployed within an underwater cable system for some time. Because these cable systems are deployed in the middle of the ocean at depths of several thousand feet, it would be very expensive to retrieve the section of cable containing the damaged grating and repair this sort of malfunction.

Accordingly, there exists a need to develop a method for coating optical fibers so that the protective coating is not tightly coupled to the outer surface of the optical fiber being protected. Although such a method would be beneficial whenever coating any type or length of optical fiber, it would be particularly useful when coating optical fiber segments, such as fiber Bragg gratings, that are easily damaged by stresses acting on their outer surface. Likewise, there exists a need for a coated optical fiber segment that is protected by a coating that is loosely coupled to the optical fiber, so that the coating will not create stresses on the outer surface of the optical fiber when the coated segment is exposed to changes in temperature.

In light of the above, an improved method for coating optical fibers is provided. By practicing the disclosed method, one can loosely couple a polymeric coating to an optical fiber segment.

The method includes interposing a nonpolar material between a polymeric coating and an optical fiber segment, both of which usually present mostly polar groups. Such a nonpolar material may be interposed between the coating and the fiber segment either by adding a mold release agent to the polymeric system before it is applied to the optical fiber or by coating the outer surface of the optical fiber with a mold release agent. Alternatively, one may chemically treat the outer surface of the optical fiber so that instead of presenting polar groups to any subsequently-applied polymeric coating, the optical fiber segment presents nonpolar groups, which are not attracted to the polar groups of the polymeric coating.

A coated optical fiber segment is also provided that contains a nonpolar material interposed between the polymeric coating and the optical fiber segment. Alternatively, a coated optical fiber is provided that includes a treating material having both polar and nonpolar groups, and which is interposed between the optical fiber and the polymeric coating and wherein its polar groups are attracted to the polar groups of the optical fiber segment and its nonpolar groups are not attracted to the polar groups of the polymeric coating. A coated optical fiber is also provided wherein the optical fiber has been chemically reacted to present a plurality of nonpolar groups to a subsequently-applied polymeric coating.
**Fig. 1** shows a coated optical fiber segment, partly in section, in accordance with a first embodiment of the invention.
**Fig. 2** shows a coated optical fiber segment in accordance with a first embodiment of the invention.
**Fig. 3** shows an exploded view of a coated optical fiber segment, partly in section, in accordance with a second embodiment of the invention.
**Fig. 4** shows a coated optical fiber segment in accordance with a second embodiment of the invention.
**Fig. 5** shows an exploded view of a coated optical fiber segment, partly in section, in accordance with a third embodiment of the invention.
**Fig. 6** shows a coated optical fiber segment in accordance with a third embodiment of the invention.

The present invention includes a method for applying a polymeric coating to an optical fiber segment. Both the polymeric coating and the optical fiber segment typically present polar groups at their surfaces that mutually attract and cause the polymeric coating to couple tightly to the optical fiber segment. If, however, a nonpolar material is interposed between the two sets of polar groups, or if either the polymeric coating or the optical fiber segment is changed so as to present nonpolar―rather than polar―groups, the polar groups would not be attracted to the nonpolar groups and the polymeric coating and the optical fiber could be loosely coupled to one another, thereby reducing or eliminating the temperature-induced shear stresses typically associated with a tightly coupled fiber segment.

One way of interposing a nonpolar material between a polymeric coating and an optical fiber segment is to add a nonpolar mold release agent to the polymeric system before it is applied to the optical fiber. Once the mold release agent has been added to the polymeric system, it is dispersed throughout the polymeric system. Consequently, when the polymeric system is applied to the optical fiber segment, some of the nonpolar material will be interposed between the polar groups of the polymeric coating and the polar groups of the optical fiber segment, thereby preventing the polar groups from attracting one another. As a result, the polymeric system can be loosely coupled to the optical fiber segment and thereby create a loosely coupled polymeric coating. Although many substances can function as mold release agents, fluorocarbon oil―and in particular, a perfluorocarbon oil sold by Mont Edison of Italy under the trade name of "Fomblin Oil"―is well suited to this task.

When coating a single Bragg fiber grating using this method, only a small quantity of mold release agent―*e.g*., one or two drops of Fomblin Oil―need be added to the polymeric system prior to coating the optical fiber segment. Next, the polymeric system may be brushed onto the fiber segment, or a coating may be created by dipping the optical fiber into the polymeric system and/or by "doctor-blading" the polymeric system and fiber segment, as is well known in the art, provided that care is taken not to damage the optical fiber segment during this process. After the polymeric system has been applied to the optical fiber segment, the coating is then cured and prepared for further handling and packaging.

Alternatively, one may interpose a nonpolar material between the polymeric coating and the optical fiber by directly coating the outer surface of the optical fiber with a mold release agent before applying the polymeric system in the manner described above.

Rather than impose a nonpolar material between the coating and the fiber, one may alternatively chemically treat the outer surface of the optical fiber so that instead of presenting polar groups to any subsequently-applied polymeric coating, the optical fiber segment presents nonpolar groups.

One way of chemically treating the outer surface of the optical fiber is to prepare a solution of a polar―preferably aqueous―solvent and a solute of long-chain molecules having both a polar group and a nonpolar group, and then either dip the optical fiber segment into the solution, or spray the solution onto the glass fiber. After the optical fiber has been exposed to the solution, treating material in the form of long-chain molecules from the solution will be attracted by their polar groups to the polar groups of the outer surface of the optical fiber segment, thereby causing the optical fiber to present mostly nonpolar groups to any polymeric system that may be subsequently applied. Of course, one may also expose the optical fiber segment directly to the treating material in its undiluted, or "neat," liquid form by either dipping the fiber segment into the liquid or spraying the liquid directly onto the glass fiber.

Next, the fiber segment should be left wet for a period―*e.g*., approximately one minute―before being blown dry. Once the solution has dried on the optical fiber segment, the polymeric system may be applied and cured as previously described so as to create a polymeric coating that is loosely coupled to the optical fiber segment. Some of the long-chain molecules that may be used as treating material solute in the solution described above include a salt of a long-chain perfluorocarboxy acid, a salt of a long-chain carboxy acid, a silane coupling agent, potassium perfluoro-octanoate, sodium hexadecanoate, polyethylene oxide, or any polymer having a hydroxyl group on one end and a hydrocarbon chain on the other end.

Similarly, one may also chemically treat the outer surface of the optical fiber by exposing the optical fiber segment to a nonpolar solvent-based solution―such as an organic solvent system―that contains treating material of long-chain molecules having both a polar group and a nonpolar group, such as a salt of a long-chain perfluorocarboxy acid, a salt of a long-chain carboxy acid, a silane coupling agent, potassium perfluoro-octanoate, sodium hexadecanoate, polyethylene oxide, or any polymer having a hydroxyl group on one end and a hydrocarbon chain on the other end, as described above. Once the optical fiber segment has been exposed to the solution―*e.g*., by dipping the segment into the solution for about one minute and then blowing it dry―the polymeric system may be applied to the optical fiber segment and cured.

Still another way of chemically treating the outer surface of the optical fiber segment, and thereby causing the outer surface to present nonpolar, rather than polar, groups to any subsequently-applied polymeric coating, is to expose the optical fiber segment to an acid―*e.g*., by dipping the segment into the acid―so as to create acid groups on the outer surface of the optical fiber. When preforming this method, it is preferable that the acid be weak. Next, one may prepare a solution of a solvent and a reactive agent (such as silane oxychloride or fluoro-alkyl-siloxane) and perform a condensation reaction on the optical fiber segment so that the fiber segment presents mostly nonpolar groups on its surface. Afterwards, one should rinse the fiber segment for several seconds, blow the segment dry, and then apply the polymeric system and cure.

By chemically treating the outer surface of the optical fiber as described above, one may cause the outer surface of the optical fiber to present nonpolar, rather than polar, groups to any subsequently-applied polymeric coating. The optical fiber can present nonpolar groups either because the polar groups of the treating material are attracted to the polar groups of the optical fiber, thereby presenting the treating material's nonpolar groups to any subsequently-applied polymeric coating, or because the outer surface of the optical fiber has been chemically reacted to present mostly nonpolar groups. Regardless, the result is that the polar groups of the coating will not be attracted to the nonpolar groups presented, thereby allowing the polymeric system to be loosely coupled to the optical fiber segment (either directly or through the treating material) and thereby create a loosely coupled polymeric coating.

The extent of the surface modification of the optical fiber segment can be measured in the tens of angstroms and therefore will not have any effect on the optical properties of the optical fiber segment itself. Likewise, the depth of the treating material attracted to the optical fiber segment will also be very small―*e.g*., less than approximately 100 angstroms. Not affecting the optical properties of the optical fiber segment is especially desired when the fiber segment is a Bragg fiber grating, which, as described above, cannot tolerate any change in its optical properties without adversely affecting the reliability of the grating and/or causing unacceptable wavelength shifts in the grating.

In addition to providing an improved method for coating optical fibers, the present invention also provides for a coated optical fiber segment. The coated optical fiber segment may contain a nonpolar material interposed between the coating and the optical fiber segment, or it may include a treating material that has both polar and nonpolar groups and that is attracted to the polar groups of the optical fiber segment. Alternatively, the outer surface of the optical fiber may have been chemically reacted so as to present nonpolar, rather than polar, groups to any subsequently-applied polymeric coating.

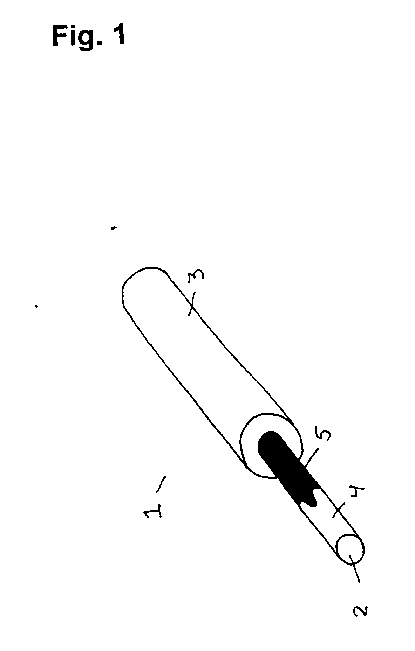

With reference to **Fig. 1**, a coated optical fiber segment **1** is shown, partly in section. The coated optical fiber segment **1** includes an optical fiber segment **2**, through which the data carried by the fiber optic cable (not shown) is to be transmitted. As discussed above, the optical fiber segment **2** can be easily damaged if not protected by a coating, such as a polymeric coating **3**.

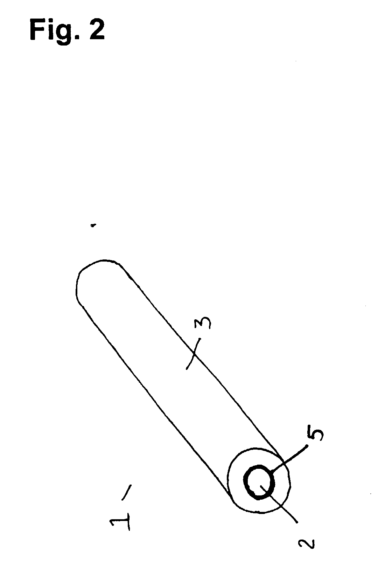

In accordance with an embodiment of the invention, the optical fiber segment **2** may have a nonpolar material **5**, such as a fluorocarbon oil, interposed between the outer surface **4** of the optical fiber segment **2** and the polymeric coating **3**. As a result, the polymeric coating **3** is loosely coupled to the optical fiber segment **2** through the nonpolar material **5**. A coated optical fiber segment in accordance with this embodiment of the invention is shown in **Fig. 2**.

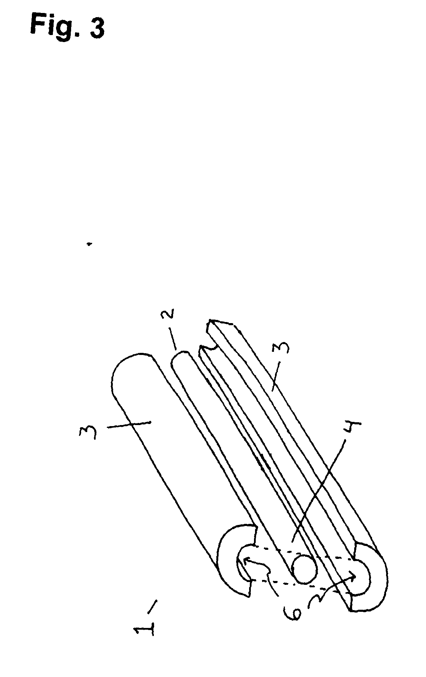

An additional embodiment of the invention is shown in **Fig. 3**, in which a thin layer of treating material (not shown)―such as a salt of a long-chain perfluorocarboxy acid, a salt of a long-chain carboxy acid, a silane coupling agent, potassium perfluoro-octanoate, sodium hexadecanoate, polyethylene oxide, or any polymer having a hydroxyl on one end and a hydrocarbon chain on the other end―covers the outer surface **4** of the optical fiber segment **2**. The depth of the treating material is preferably very small (*e.g*., less than 100 angstroms in thickness).

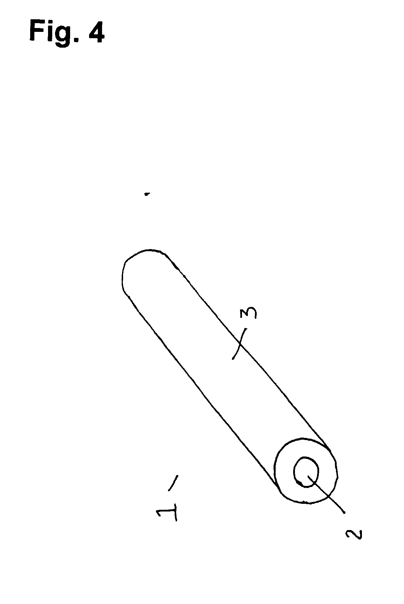

The polar groups of the molecules of the treating material covering the outer surface **4** of the optical fiber segment **2** are attracted to the polar groups of the outer surface **4** of the optical fiber segment **2**. As a result, the treating material is tightly coupled to the optical fiber segment **2**, and the treating material presents mostly nonpolar groups to the inner surface **6** of the polymeric coating **3**, which contains mostly polar groups. Consequently, the nonpolar groups of the treating material and the polar groups of the inner surface **6** of the polymeric coating **3** will not be attracted to one another, even when the polymeric coating **3** and the treating material-covered optical fiber segment **2** are in direct contact and the polymeric coating **3** has been cured. **Fig. 4** shows a coated optical fiber segment in accordance with this embodiment of the invention wherein the treating material-covered optical fiber segment **2** is in direct contact with, but is loosely coupled to, the polymeric coating **3**.

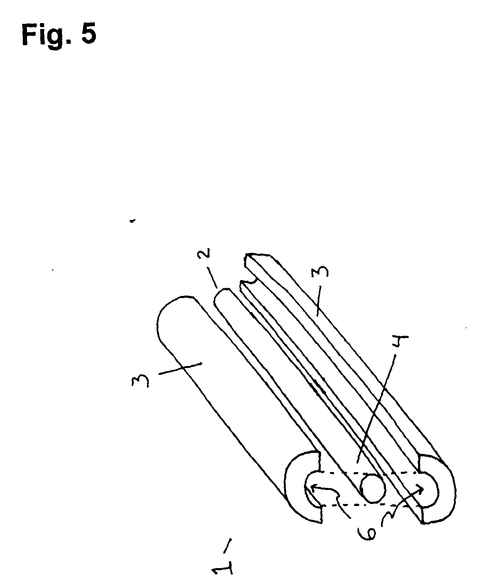

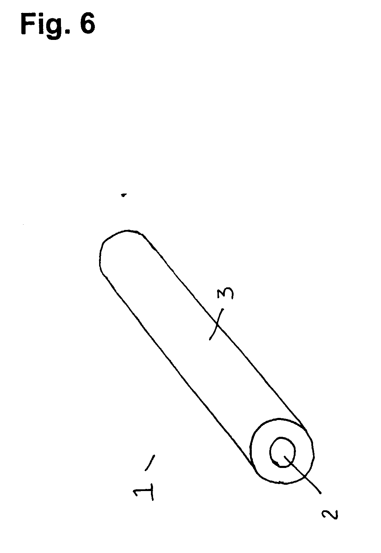

Alternatively, the outer surface **4** of the optical fiber segment **2** may be chemically reacted so as to present mostly nonpolar groups to the inner surface **6** of the polymeric coating **3**, thereby obviating the need for a treating material but still resulting in a loosely coupled coated optical fiber segment. **Fig. 5** shows an exploded view of a coated optical fiber segment, partly in section, in accordance with this embodiment of the invention, and **Fig. 6** shows the coated optical fiber segment.

Still other objects and advantages of the present invention will become readily apparent to those skilled in this art from the above-recited detailed description. As will be realized, the invention is capable of other and different embodiments, and its several details are capable of modification in various respects, all without departing from the invention. Accordingly, the drawings and descriptions are to be regarded as illustrative in nature, and not as restrictive.

## Claims

1. A method for loosely coupling a polymeric coating to an optical fiber segment, comprising the steps of:
a. combining a mold release agent with a polymeric system;
b. applying said polymeric system, including said mold release agent, to said optical fiber segment to create said polymeric coating; and
c. curing said polymeric coating.

2. The method as recited in claim 1, wherein said mold release agent comprises fluorocarbon oil.

3. A method for loosely coupling a polymeric coating to an optical fiber segment, comprising the steps of:
a. applying a mold release agent to said optical fiber segment;
b. applying a polymeric system to said optical fiber segment to create said polymeric coating; and
c. curing said polymeric coating.

4. A method for loosely coupling a polymeric coating to an optical fiber segment, comprising the steps of:
a. exposing said optical fiber segment to a treating material comprising molecules having a nonpolar group and a polar group;
b. applying a polymeric system to said exposed optical fiber segment to create said polymeric coating; and
c. curing said polymeric coating.

5. A method for loosely coupling a polymeric coating to an optical fiber segment, comprising the steps of:
a. preparing a solution comprising a solvent and a treating material, said treating material comprising molecules having a nonpolar group and a polar group;
b. exposing said optical fiber segment to said solution;
c. applying a polymeric system to said exposed optical fiber segment to create said polymeric coating; and
d. curing said polymeric coating.

6. The method as recited in claim 5, wherein said solvent is polar or nonpolar.

7. The method as recited in claim 4, 5 or 6, wherein said molecules comprise long-chain molecules.

8. The method as recited in claim 4, 5, 6 or 7, wherein said treating material is selected from the group consisting of a salt of a long-chain perfluorocarboxy acid, a salt of a long-chain carboxy acid, a silane coupling agent, potassium perfluoro-octanoate, sodium hexadecanoate, polyethylene oxide, and a polymer having a hydroxyl group on one end and a hydrocarbon chain on the other end.

9. A method for loosely coupling a polymeric coating to an optical fiber segment, said optical fiber segment having an outer surface, comprising the steps of:
a. exposing said optical fiber segment to an acid;
b. preparing a solution of a solvent and a reactive agent having a nonpolar region;
c. performing a condensation reaction on said optical fiber segment with said solution;
d. applying a polymeric system to said optical fiber segment to create said polymeric coating; and
e. curing said polymeric coating.

10. The method as recited in claim 9, wherein said reactive agent is selected from the group consisting of silane oxychloride or fluoro-alkyl-siloxane.

11. A coated optical fiber segment, comprising:
a. an optical fiber segment, said optical fiber segment having an outer surface;
b. a nonpolar material covering said outer surface; and
c. a coating covering said nonpolar material.

12. A coated optical fiber segment, comprising:
a. an optical fiber segment, said optical fiber segment having an outer surface with polar groups;
b. a treating material covering said outer surface, said treating material comprising a plurality of molecules having a nonpolar group and a polar group; and
c. a coating covering said treating material, said coating having an inner surface with polar groups.

13. The device as recited in claim 12, wherein said treating material is less than approximately 100 angstroms in thickness.

14. The device as recited in claim 12 or 13, wherein said treating material is attracted at its polar groups to the polar groups of said outer surface of said optical fiber segment and wherein said inner surface of said coating is loosely coupled to said treating material.

15. A coated optical fiber segment, comprising:
a. an optical fiber segment, said optical fiber segment having an outer surface with nonpolar groups; and
b. a coating covering said outer surface, said coating having an inner surface with polar groups.

16. The device as recited in claim 11, 12, 13, 14 or 15, wherein said optical fiber segment is a fiber grating.

17. The device as recited in any one of claims 11 to 16, wherein said coating is a polymeric coating.

18. The device as recited in any one of claims 11 to 17, wherein said optical fiber segment comprises SiO₂.

19. The device as recited in any one of claims 11 to 18,
wherein said outer surface of said optical fiber segment is loosely coupled to said inner surface of said coating.
